# EUROPÄISCHE PATENTANMELDUNG

(11) **EP 2 241 750 A1**
(43) Veröffentlichungstag der Anmeldung: **20.10.2010**
(21) Anmeldenummer: 09005431.3
(22) Anmeldetag: 16.04.2009
(51) Int. Cl.: F03D 3/04

(54) **Windabweiser**

(71) Anmelder: Commercon, Simon, 67686 Mackenbach (DE)
(72) Erfinder: Commercon, Simon, 67686 Mackenbach (DE)

(57) **Zusammenfassung**

Windabweiser- und Leitsystems für Windrotoren mit vertikaler Achse zur Reduzierung der Verluste durch die Windkraft auf der rücklaufende Seite der Windfangflächen bestehend aus
einem Luftleitprofil das den Wind auf der Rücklaufseite ableitet, sowie einem Luftleitprofil das den Luftstrom gezielt der Drehrichtung zuleitet. Außerdem ist der Windabweiser mit Leitprofilen so ausgelegt, dass er sich selbständig in Windrichtung ausrichtet.

Durch die geringe Bauhöhe reduziert sich das Moment durch den Luftwiederstand (geringer CW-Wert) und es müssen nur kleine Kräfte in der Halterung/Befestigung der Anlage aufgenommen werden. Das Gesamtgewicht der Anlage ist deutlich reduziert.

## Beschreibung

### Erfindungsgebiet

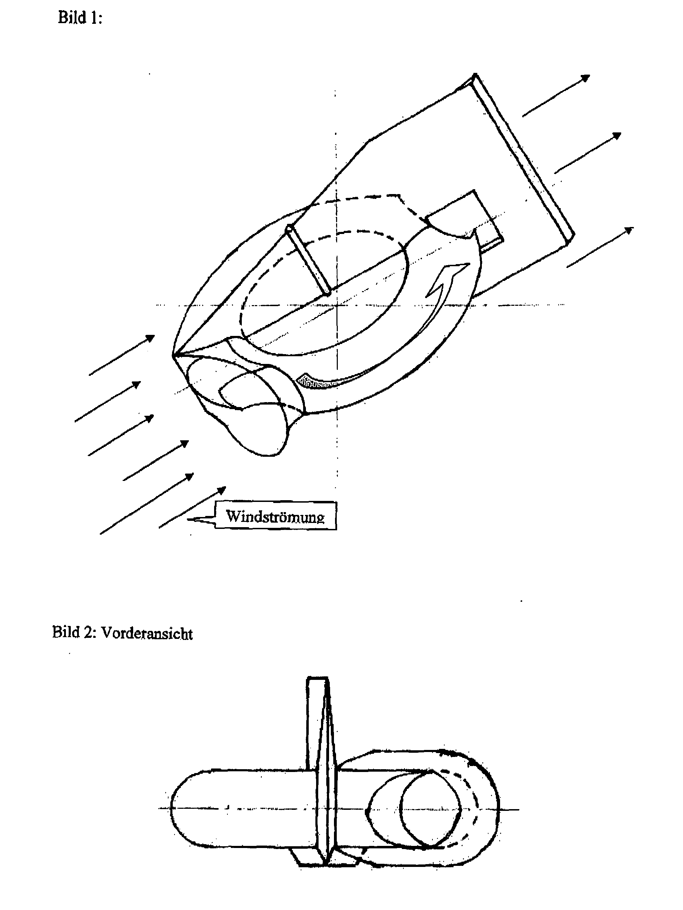

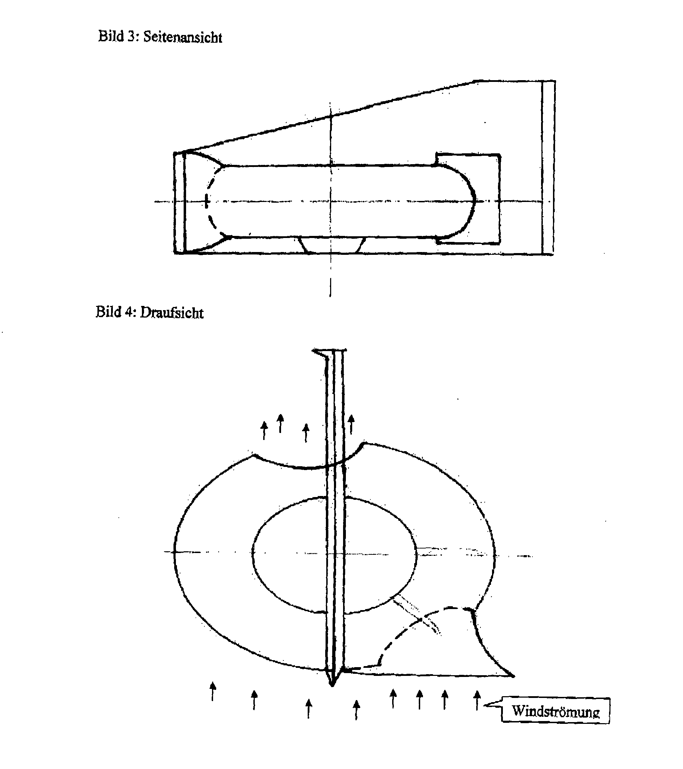

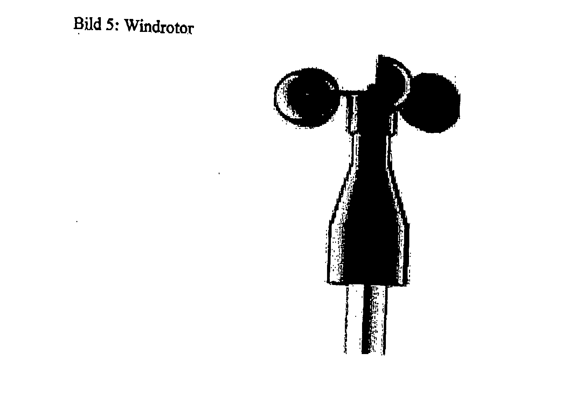

Die vorliegende Erfindung betrifft einen Windabweiser für vertikale Windrotoren (Bild 4), der mittels einer Ummantelung zum gezielten leiten von Windströmungen die Bremswirkungen und Turbulenzen an Windrotoren auf der Rücklaufseite vermeidet, und durch ein Luftleitprofil den Ertrag des Windrotors erhöht.

Stand der Technik sind so genannte Windrotoren mit **vertikaler** Anordnung der Achse (z.B. DE 28 40 857 A1 oder DE 102004024752 A1 auch bekannt als Darrieus-Rotor, Savonius - Rotor oder Flender - Rotor) und **horizontaler** Anordnung der Achse (allg. als Windräder).
Vorteil der Vertikalachsen - Windrotoren sind:
- einfacher Aufbau,
- hohes Drehmoment bei relativ niederer Drehzahl
- reagieren hinsichtlich stark wechselnder Windrichtungen unempfindlich
- bei Erhöhung der Windgeschwindigkeit steigen die Kräfte geringer an, als bei Horizontalachsen - Windrädern.
- es werden kaum wahrnehmbare Laufgeräusche erzeugt.
Bei Vertikalachsen - Windrotoren besteht allerdings der Nachteil, dass die windnutzenden Flächen auf der rücklaufenden Seite gegen die Windströmung zurückgeführt werden müssen. Bisher wurden deshalb die Windfangflächen mit unterschiedlichsten Profilen oder auch als Pendelflügel ausgelegt um den Widerstand möglichst zu minimieren.
Das Problem ist nun, dass bei der Drehung des Windrotors auch die Rückseite mit Wind beaufschlagt wird, wodurch der Windrotor abgebremst, die verfügbar Windkraft abnimmt und so der Wirkungsgrad deutlich reduziert wird.
Da sich im Regelfall die Windströmung nicht als homogen darstellt, erreichen auch die vorgenannten Maßnahmen an den Windfangflächen nur eine geringe Verbesserung, da die vorhandenen Luftturbulenzen als auch die sich an den Windflügeln bildenden Turbulenzen die Leistung des Windrotors negativ beeinflussen und den Ertrag reduzieren.

### Beschreibung

Durch den Einsatz eines **Windabweiser- und Leitsystems**, das den Wind auf der Seite der Rückwärtsbewegung des Windrotors abweist bzw. umleitet, kann der Wirkungsgrad erhöht werden, da nun die Bremswirkung gegen 0 geht.

Aus der DE 19607592 A1 und DE 19826475 A1 sind Windleiteinrichtungen bekannt geworden, bei denen der effektiv Windwiderstand derjenigen Windfangflächen, die in eine Richtung gegen den Wind bewegt sind, reduziert ist, weil ein Windleitelement (Windabweiser) einen Windschutz bildet. Bei beiden Einrichtungen wird ein Windschutz erreicht, der 50% der vom Wind beaufschlagten Fläche abdeckt. Dadurch kommt es an der Übergangskante des Windschutzelementes zur Windfangfläche, sowie an den Windfangflächen selbst zu Turbulenzen, die eine Strömungsstörung verursachen und den Wirkungsgrad deutlich vermindern.

Aufgabe der Erfindung ist es, einen eingangs genannten Windabweiser zu schaffen, der mehr als 50% Windschutzfläche erreicht, die Turbulenzen verhindert, die Strömung orientiert dem Windrotor zuleitet und den Wirkungsgrad erhöht. Zusätzlich die Bauhöhe deutlich zu reduzieren um die wirksamen Hebelkräfte auf die Befestigung möglichst klein zu halten und damit geringere Anforderungen an das Befestigungsgestell zu stellen. Durch die kleinere Bauhöhe werden die Anforderungen an die Stabilität der Anlage insgesamt reduziert, wodurch das Gewicht klein gehalten werden kann.

Die Erfindung betrifft ein **Windabweiser- und Leitsystems** für Windkraftanlagen mit vertikaler Achse zur Reduzierung der Verluste durch die Windkraft auf der rücklaufenden Seite der Windfangflächen.
Das **Windabweiser- und Leitsystems** ist **dadurch gekennzeichnet dass** es mit einem Luftleitprofil den Wind auf der Rücklaufseite ableitet, sowie mit einem Luftleitprofil das den Luftstrom bündelt und der Drehrichtung zuleitct. Außerdem ist der Windabweiser mit Leitprofilen so ausgelegt, dass er sich selbständig in Windrichtung ausrichtet.

Diese Aufgabe wird bei dem oben genannten Windabweiser- und Leitsystem erfindungsgemäß dadurch gelöst, dass das Luftleitprofil den Luftstrom zu beiden Seiten des Systems gezielt hinleitet.
Auf der Seite der Rückwärtsbewegung des Windrotors wird der Windrotor vollkommen von einer Röhre umgeben, um die Bremswirkung des Luftstromes zu verhindern.

Auf die Seite zur Beaufschlagung des Windrotors wird der Luftstrom umgeleitet um die Turbulenzen zu verringern und den Winddruck zu erhöhen.
Hierzu ist der Windabweiser aerodynamisch so gestaltet, dass ein möglichst geringer Luftwiderstand entsteht und sich keine Luftverwirbelungen entwickeln, die wiederum zu Störungen des Windrotors führen.
Wichtig ist bei der Gestaltung, dass das Windabweisersystem sich eigenständig, selbsttätig, ohne weiteren Antrieb, immer in Windrichtung ausrichtet, um eine dauernde Wirkung zu erhalten.
Die Leitung des Windes durch eine sich im Querschnitt verengende Röhre bewirkt eine Bemoulli - Effekt. Die Strömungsgeschwindigkeit des Windes wird erhöht und auf der Austrittsseite nach der Verengung wird eine Sogwirkung hervorgerufen. Dadurch läuft der Windrotor bereits bei geringen Windgeschwindigkeiten selbständig an was wiederum eine Erhöhung des Wirkungsgrades bewirkt.
Damit der Unterdruck seine Wirkung nicht durch zufliesende Außenluft verliert, muss das System mit einer kreisförmigen, berührungslosen Labyrinthdichtung versehen werden. Diese Labyrinthdichtung verhindert den Zufluss von Außenluft in den Unterdruckbereich.

Der Übergang des Rotors in den Unterdruckbereich muss entsprechend ausgelegt sein um einen Luftstau zu vermeiden der die Leistung beeinträchtigen würde.
Durch die Gestaltung als Röhrensystem erreicht man eine geringe Bauhöhen, wodurch wiederum die entstehenden Hebelkräfte an der Anlage durch den Luftdruck vermindert werden was zu einer geringeren Belastung der Befestigungselemente als auch zu einer leichteren Bauweise der Anlage führt.

## Patentansprüche

1. **Windabweiser- und Leitsystem für vertikale Windrotoren**
**dadurch gekennzeichnet, dass**
es mit Luftleitprofilen zum entsprechenden zu- und ableiten der Luftmassen ausgelegt ist.

2. **Windabweiser- und Leitsystem nach Anspruch 1**
**dadurch gekennzeichnet, dass**
dessen Auslegung derart gestaltet ist, dass er sich selbständig in Windrichtung ausrichtet.

3. **Windabweiser- und Leitsystem nach Anspruch 2**
**dadurch gekennzeichnet, dass**
es ohne zusätzlichen Antrieb endlos rotieren kann um sich in Windrichtung auszurichten.

4. **Windabweiser- und Leitsystem nach Anspruch 1**
**dadurch gekennzeichnet, dass**
eine Abdeckung des Windrotors von mehr als 50% der Anlagenfläche in Windrichtung erreicht wird.

5. **Windabweiser- und Leitsystem nach Anspruch 1**
**dadurch gekennzeichnet, dass**
eine komplette Winddruckreduzierung auf der Rücklaufseite des Windrotors erreicht wird, indem dieser Bereich vollständig abdeckt ist.

6. **Windabweiser- und Leitsystem nach Anspruch 1**
**dadurch gekennzeichnet, dass**
durch die Querschnittsreduzierung im Windleitkanal ein Bemulli - Effekt auftritt, wodurch sich die Luftgeschwindigkeit erhöht, einen größeren Wirkungsgrad erreicht und die notwendige Windgeschwindigkeit zum anlaufen des Systems reduziert.

7. **Windabweiser- und Leitsystem nach Anspruch 1**
**dadurch gekennzeichnet, dass**
es sowohl für linkslaufende als auch für rechtslaufende Windrotoren einsetzbar ist

8. **Windabweiser- und Leitsystem nach Anspruch 1**
**dadurch gekennzeichnet, dass**
durch eine aerodynamischen Sogwirkung an der beaufschlagten Seite der Windkraftanlage ein Unterdruck im Rücklauf erzeugt wird, wodurch der Wirkungsgrad sich erhöht.

9. **Windabweiser- und Leitsystem nach Anspruch 2+3**
**dadurch gekennzeichnet, dass**
es eine obere und untere Radiallagerung aufweist, wobei eine Lagerstelle zusätzlich als Axiallager ausgelegt ist um eine entsprechende Ausrichtung zum Windrotor zu erhalten.

10. **Windabweiser- und Leitsystem nach Anspruch 7**
**dadurch gekennzeichnet, dass**
es eine Labyrinthdichtung aufweist, um die Innenräume zur Umgebungsluft ab zu dichten, damit die Wirkung des Unterdruckes stabil bleibt

11. **Windabweiser- und Leitsystem nach Anspruch 7**
**dadurch gekennzeichnet, dass**
durch eine geringe Bauhöhe die Hebelkräfte durch den Luftdruck auf die Anlage reduziert werden und damit die Befestigungselemente kleiner ausgelegt werden können als auch das Gewicht der Anlage verringert wird.

12. **Windabweiser- und Leitsystem nach Anspruch 1**
**dadurch gekennzeichnet dass**
durch die röhrenförmige Auslegung der Leitprofile eine gerichtete Luftströmung erreicht wird, wobei der Querschnitt der Röhren nach alle geometrischen Möglichkeiten ( zylindrisch, eckig, polygonal, elliptisch, usw.) gestaltet werden kann.
